Europäisches Patentamt

European Patent Office

Office européen des brevets

(11) Publication number: **0 326 343**
**A2**

# (12) EUROPEAN PATENT APPLICATION

(21) Application number: **89300678.3**

(22) Date of filing: **25.01.89**

(51) Int. Cl.4: **G 11 B 7/09**

(30) Priority: **25.01.88 JP 12471/88**

(43) Date of publication of application:
**02.08.89 Bulletin 89/31**

(84) Designated Contracting States: **DE FR GB IT NL**

(71) Applicant: **CANON KABUSHIKI KAISHA**
**30-2, 3-chome, Shimomaruko**
**Ohta-ku Tokyo (JP)**

(72) Inventor: **Kanda, Shigeto**
**No. 1-407 Senchurihaitsu 28-1, Narusegaoka 2-chome**
**Machida-shi Tokyo (JP)**

(74) Representative: **Beresford, Keith Denis Lewis et al**
**BERESFORD & Co. 2-5 Warwick Court High Holborn**
**London WC1R 5DJ (GB)**

(54) **Optical information recording apparatus.**

(57) An optical information recording apparatus comprises an optical head for recording information by irradiating a recording medium with a light beam, a tracking servo circuit for correcting an error in position between the irradiating position of the light beam and a track formed on said medium, a circuit for detecting abnormality in the tracking servo, and a control circuit for reducing the power of the light beam irradiating the medium to a non-zero level not enough for recording, in response to a detection signal from the abnormality detecting circuit.

FIG.4

## Description

### Optical Information Recording Apparatus

BACKGROUND OF THE INVENTION

Field of the Invention

The present invention relates to an apparatus for recording information by irradiating a recording medium with a light beam.

Related Background Art

Information recording media of various forms, such as disk-like form, card-like form and tape-like form are known for recording information thereon and reading out the information recorded thereon. Also recently, attention has been paid to a method of applying a light beam condensed in the form of a spot to these media to thereby accomplish recording and reading of information, because of its capability to achieve a high recording density.

The manner of such recording will hereinafter be described by an example of using a card-like optical recording medium, which will be hereinafter called optical card.

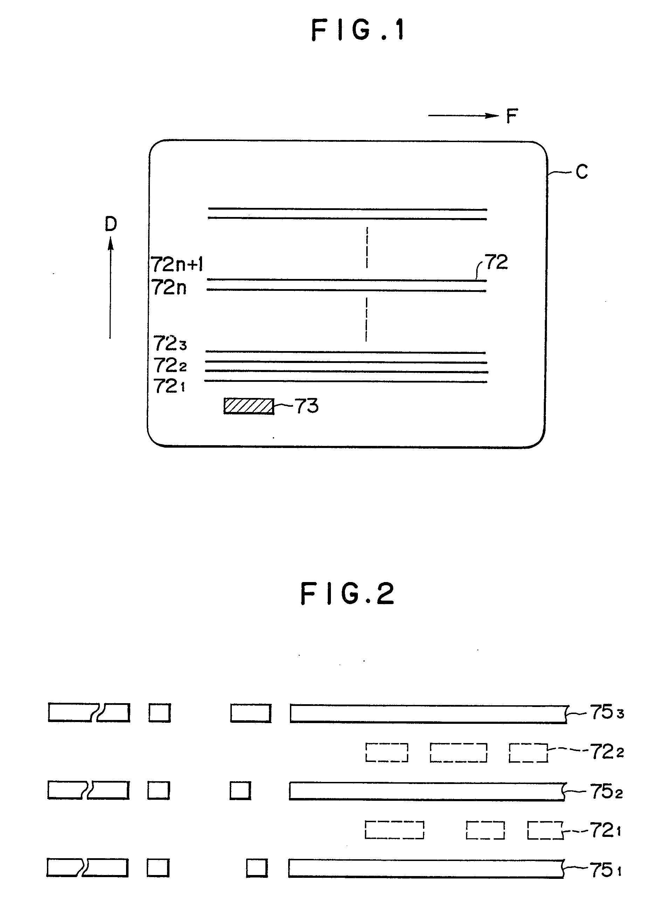

Fig. 1 of the accompanying drawings is a schematic plan view of the optical card, and Fig. 2 is a partial enlarged view thereof.

In Fig. 1, the letter C designates the optical card, the reference numeral 72 denotes information tracks, and the reference numeral 73 indicates a home position. Information is recorded as optically detectable record pit rows (information tracks) on the optical card C by causing a light beam modulated in accordance with recording information and stopped down into a minute spot to scan the card C. For recording or reproducing information accurately without any trouble such as crossing of the information tracks 72, it is necessary to control the applied position of said light beam in a direction perpendicular to the scanning direction (auto tracking, hereinafter represented by AT). Also, to apply the minute spot stably regardless of the bending and mechanical error of the optical card, it is necessary to control the applied position of the light beam in a direction perpendicular to the optical card (auto focusing, hereinafter indicated by AF). As shown in Fig. 2, tracking tracks 75 ($75_1$ $75_2$, ...) for effecting the above-mentioned AT are provided between the information tracks 72 ($72_1$, $72_2$, ...) of the optical card C.

A method of recording information on the optical card will now be described.

In Fig. 1, the light beam is at first positioned at the home position 73. The light beam is then moved in a direction D to find out an information track $72_n$ to be recorded, and scans said information track $72_n$ in a direction F, thereby accomplishing recording or reproduction of information. Track numbers are recorded on the information tracks 72, and by reproducing this information, the information track being currently recorded can be known. Also, recording of information is carried out in the order of suffixes, namely in the order $72_1$, $72_2$, ..., $72_n$.

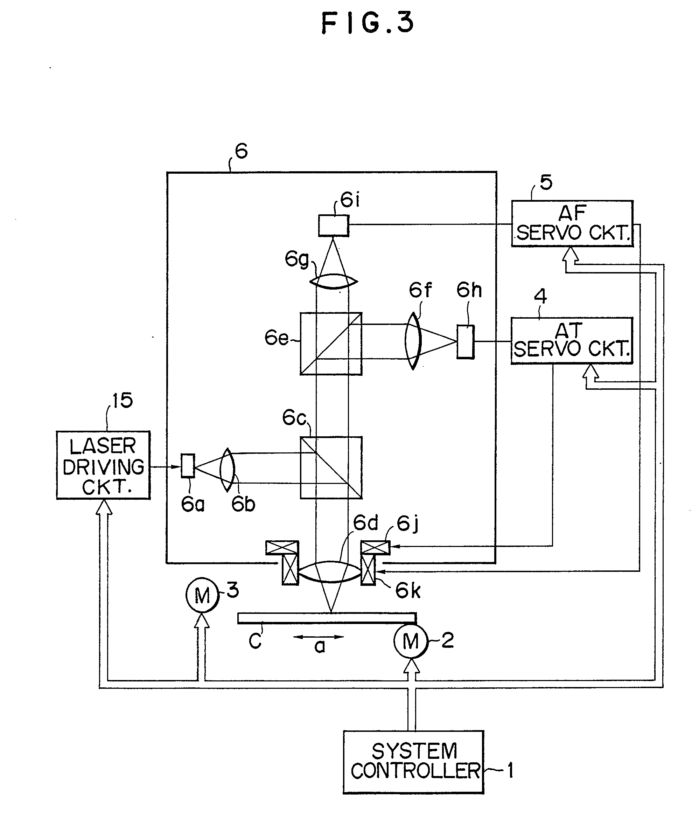

Fig. 3 is a block diagram showing the construction of an information recording/reproducing apparatus for the optical card as described above.

In Fig. 3, a system controller 1 controls motors 2 and 3, and AT and AF servo circuits 4 and 5, to thereby control recording or reproduction of information on the optical card C.

The motor 2 reciprocally moves the optical card C in the direction of arrow a, whereby a light beam is applied from an optical head 6 along the information tracks of the optical card C. The motor 3 is for moving the optical head 6 in a direction perpendicular to the information tracks on the optical card C.

The optical head 6 has a light source 6a comprising a semiconductor laser, a collimator lens 6b for collimating the light beam from the light source 6a, a beam splitter 6c and an objective lens 6d, and applies a light beam for recording/reproduction onto the recording surface of the optical card C. The light source 6a is driven by a laser driving circuit 15.

The optical head 6 also has a beam splitter 6e, condensing lenses 6f and 6g, and photoelectric converters 6h and 6i. The light beam reflected on the recording surface of the optical card C is received by the photoelectric converters 6h and 6i and converted into electrical signals, which are supplied to the AT servo circuit 4 and the AF servo circuit 5, respectively.

The AT servo circuit 4 and the AF servo circuit 5 provide driving currents to the tracking coil 6j and focusing coil 6k of the optical head 6, thereby moving the objective lens 6d and effecting the AT and AF control.

The basic structure of such an information recording-reproducing apparatus is disclosed, for example, in the U.S. Application Serial No. 812,995 (filed December 24, 1985) and GB-A-2172138.

Now, in the apparatus as described above, when a defect or defects are present on the recording medium or when a shock is applied from the outside to the recording medium, there sometimes occurs abnormality to the tracking servo (that is, a phenomenon that AT deviates and the light beam does not correctly trace the information tracks). When such AT deviation occurs during recording, the light spot strays on the medium, and this has led to a problem that information is superposedly written on the recorded information to cause the latter information to disappear.

In order to avoid such drawback, the U.S. Patent No. 4,554,652 discloses an optical information processing apparatus provided with means for detecting such tracking error, and capable of interrupting the irradiation of light beam to the recording medium once such tracking error is detected.

However, such turning-off of the light source results in an inconvenience in the succeeding process, as the optical head etc. becomes totally uncontrollable. Also the re-starting of the recording requires a long time, because the optical source has to be warmed up again, and the auto tracking and auto focusing functions have to be re-initialized.

## SUMMARY OF THE INVENTION

In consideration of the foregoing, the object of the present invention is to provide an optical information recording apparatus not associated with the drawbacks of the prior technology explained above, and capable of avoiding destruction of recorded information and re-starting the succeeding process or the recording operation even in the presence of defects in the medium or of mechanical shocks.

The foregoing object can be achieved, according to the present invention, by an optical information recording apparatus comprising an optical head for recording information by irradiating a recording medium with a light beam, a tracking servo circuit for correcting a positional error between the irradiating position of said light beam and a track formed on said medium, a circuit for detecting abnormality in said tracking servo, and a control circuit for reducing the power of light beam irradiating said medium to a non-zero level that is insufficient for recording, in response to a detection signal from said abnormality detecting circuit.

## BRIEF DESCRIPTION OF THE DRAWINGS

Figs. 1 and 2 are respectively a schematic plan view and a partially magnified view of an optical card;

Fig. 3 is a block diagram of a conventional optical information recording/reproducing apparatus;

Fig. 4 is a block diagram of an optical information recording/reproducing apparatus embodying the present invention;

Fig. 5 is a schematic perspective view of a displacement detector shown in Fig. 4;

Fig. 6 is a block diagram showing an example of an AT abnormality detecting circuit shown in Fig. 4;

Figs. 7A to 7C are wave form charts showing various signals in the circuit shown in Fig. 6;

Fig. 8 is a wave form chart showing the mode of power control of the light beam;

Fig. 9 is a block diagram showing another example of the AT abnormality detecting circuit shown in Fig. 4;

Figs. 10A and 10B are wave form charts showing signals in the circuit shown in Fig. 9;

Figs. 11 and 12 are block diagrams showing still other examples of the AT abnormality detecting circuit shown in Fig. 4; and

Fig. 13 is a circuit diagram showing the function of the circuit shown in Fig. 12.

## DETAILED DESCRIPTION OF THE PREFERRED EMBODIMENTS

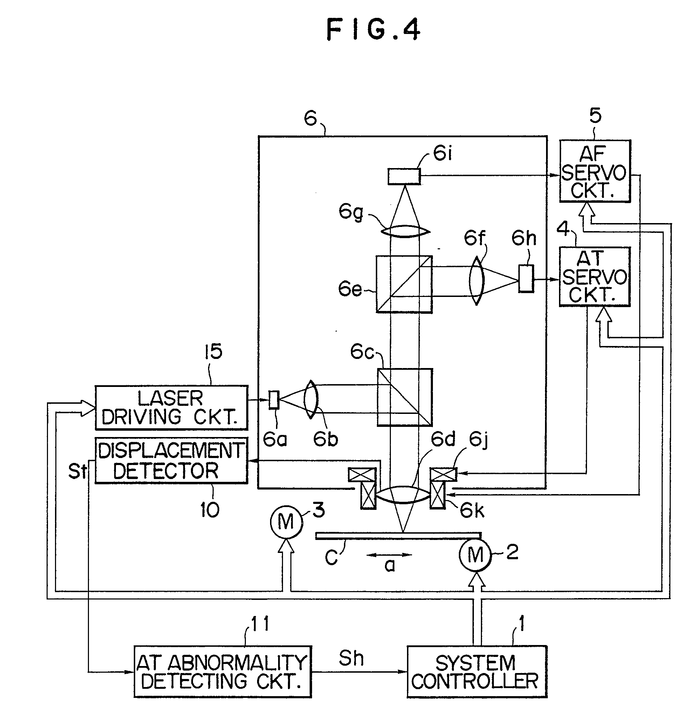

Fig. 4 is a block diagram of an optical card information recording/reproduction apparatus embodying the present invention.

A system controller 1 controls recording and reproduction of information on an optical card C, by giving instruction signals to motors 2, 3; an AT servo circuit 4; an AF servo circuit 5; and a laser driving circuit 15.

The motor 2 causes the optical card C to reciprocate in a direction as indicated by arrow a, whereby a light spot being irradiated from an optical head 6 along the information track on the optical card C. The motor 3 is used for moving the optical head 6 in a direction perpendicular to the information tracks on the optical card C.

The optical head 6 has a light source 6a comprising a semiconductor laser, a collimator lens 6b for collimating the light beam from the light source 6a, a beam splitter 6c and an objective lens 6d, and applies a light beam for recording/reproduction onto the recording surface of the optical card C. The light source 6a is driven by a laser driving circuit 15.

The optical head 6 is provided with a beam splitter 6e, condenser lenses 6f, 6g, and photoelectric converters 6h, 6i. Receiving the light beam reflected on the recording surface of the optical card C, the photoelectric converters 6h, 6i generate a tracking signal and a focusing signal, which are respectively supplied to the AT servo circuit 4 and the AF servo circuit 5.

The AT servo circuit 4 and the AF servo circuit 5 provide a tracking coil 6j and a focusing coil 6k of the optical head 6 with driving currents, thereby moving the objective lens 6d under auto tracking and focusing control.

A position sensor 10, for detecting the relative position of the objective lens 6d controlled by the tracking coil 6j and the optical head 6 itself, and its detection output signal St is supplied to an AT abnormality detecting circuit 11 for identifying the presence or absence of abnormality in tracking.

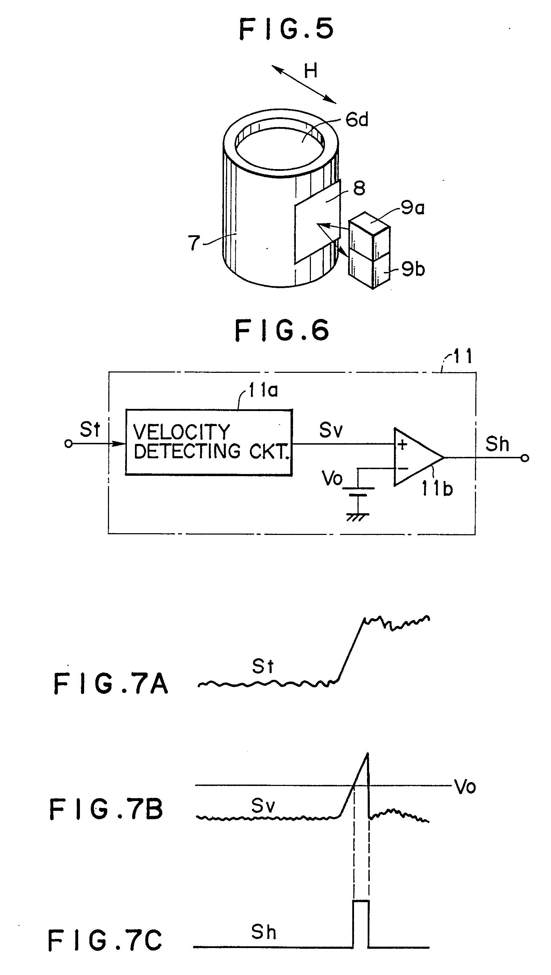

Fig. 5 is a schematic perspective view of an example of said position sensor 10. A lens body tube 7 supporting the objective lens 6d is provided with a reflective surface 8, to which light is projected from a light-emitting diode 9a. The reflected light is received by a photodiode 9b. When the objective lens 6d moves in the tracking direction H, the amount of light received by the photodiode 9b varies. Thus the displacement of the objective lens 6d can be detected from said change in the received amount of light.

Fig. 6 is a circuit diagram showing the structure of the AT abnormality detecting circuit 11, and Figs. 7A to 7C are wave form charts showing the function thereof.

In Fig. 6, the output signal St (Fig. 7A) of the position sensor 10 is supplied to a circuit 11a for detecting the relative speed of the objective lens 6d and the optical head 6, and then supplied to a comparator 11b in the form of a voltage signal Sv (Fig. 7B) proportional to the speed. When the voltage signal Sv is larger than a reference voltage Vφ namely when the moving speed of the objective lens 6d is larger than a predetermined value (Vφ), the comparator 11b sends a tracking abnormality detection signal Sh (Fig. 7C) to the system controller 1 thereby informing abnormality. In response the system controller 1 sends an instruction to immediately interrupt the recording to the laser driving circuit 15. In response said circuit 15 reduces the power of the light beam irradiating the optical card C. Such light power control can be conducted, for example, in the following manner.

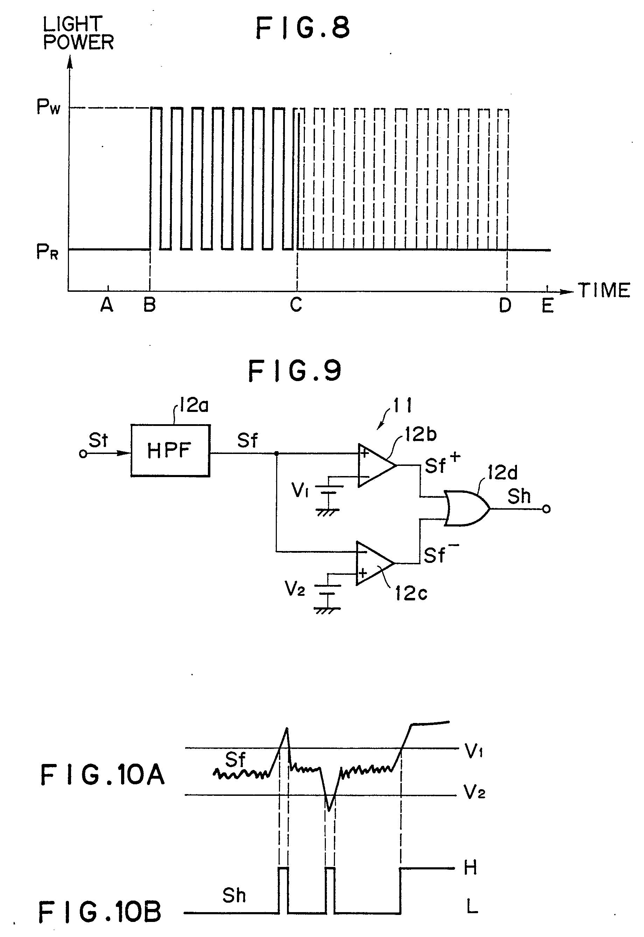

Fig. 8 is a chart showing the modulation of the laser power, in which the moving direction of the optical card is changed at a time A and E. That is, a time A to E means to a time spent for moving the optical card C at point A to point E in one direction. From a time A to B the laser power is $P_R$, which is enough power for obtaining the tracking signal and the focusing signal for the tracking servo and focusing servo operations, but is insufficient for recording on the recording surface at the moving speed of the optical card C in this state. After the recording operation is started from a time B, the laser power is so modulated as to have two levels $P_R$ and $P_W$ according to the information to be recorded. Said power $P_W$ is enough for information recording on the recording surface at the moving speed of the optical card C in this state. If the tracking operation is normal, the recording operation is continued until a time D, and the laser power is fixed thereafter at $P_R$ until a time E. On the other hand, if the abnormality in the tracking operation is found at the time C, the laser power is immediately fixed at the level $P_R$, thereby interrupting the recording operation.

The light source is not turned off but the light power is simply lowered as explained above, so that the AT and AF controls are continued and the succeeding process can be smoothly conducted. Therefore, in case of restarting the recording operation by moving the light beam to the original track or to another track, it is possible to reduce the time until the re-start of recording.

The abnormality in tracking is detected by the displacement per time, or speed, of the objective lens 6d through the speed detecting circuit 11a, because a simple detection with the amount of displacement will lead to an error. More specifically, if the displacement of the objective lens 6d from the neutral point becomes large, for example due to an external low-frequency vibration within the tracking range, or an eccentricity or a skew of the recording medium, it becomes necessary to move the optical head 6 with the motor 3, thereby returning the objective lens 6d to a certain range from the neutral point while maintaining the tracking operation of the objective lens 6d. The amount of displacement observed in such situation is large but does not correspond to an abnormality in tracking. For this reason there is provided a velocity detecting circuit 11a for detecting the amount of displacement of the objective lens 6d per time, thereby preventing erroneous detection and achieving accurate control.

Fig. 9 is a circuit diagram showing a second embodiment of the AT abnormality detecting circuit 11, and Figs. 10A and 10B are wave form charts showing the function thereof.

In Fig. 9, the output signal St of the position sensor 10 is supplied to a high-pass filter (HPF) 12a, so that components of a predetermined frequency or higher alone are supplied, as a signal Sf, to comparators 12b, 12c (Fig. 10A). The output Sf+ of the comparator 12b assumes a high-level state when the signal Sf is larger than a reference voltage v1, while the output Sf- of the comparator 12c assumes a high-level state when the signal Sf is smaller than a reference voltage V2. Either of said signals Sf+, Sf- is in the high-level state, an OR circuit 12d sends a tracking abnormality detection signal Sh to the system controller 1 (Fig. 10B), which in response reduces the power of the laser to a non-recording state.

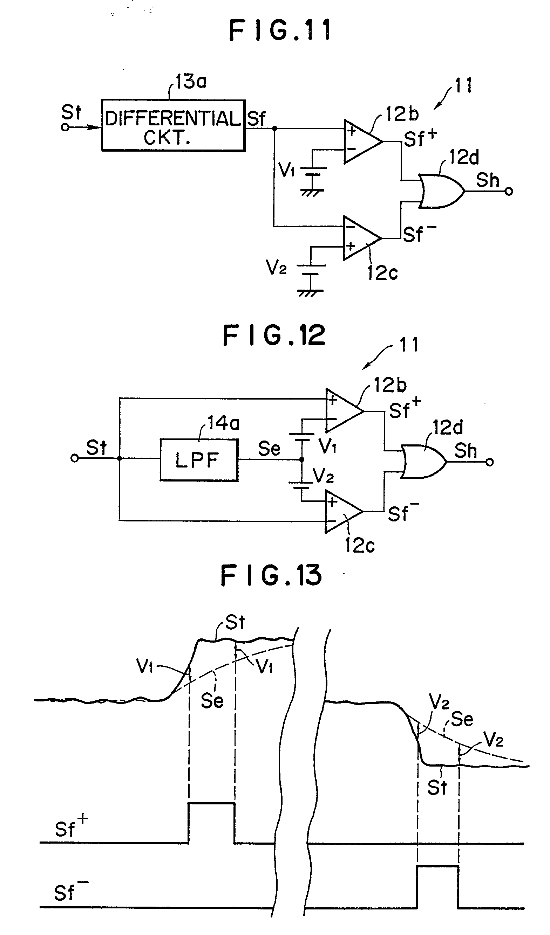

Fig. 11 is a circuit diagram showing a third embodiment of the AT abnormality detecting circuit 11, which is same as that shown in Fig. 9 except that the high-pass filter 12a is replaced by a differentiating circuit 13a.

This embodiment also detects the amount of change per unit time of the output St of the position sensor 10, and informs the system controller 1 of an abnormality eventually detected.

Fig. 12 is a circuit diagram showing a fourth embodiment of the AT abnormality detecting circuit 11, and Fig. 13 is a wave form chart showing the function thereof.

In Fig. 12, the output St of the position sensor 10 is supplied to a low-pass filter (LPF) 14a, of which output, Se consisting of components of a predetermined frequency or lower, is supplied to comparators 12b, 12c after the addition of constant voltages V1, V2. The other input terminals of the comparators 12b, 12c receive the output St of the position sensor 10.

As shown in the left-hand portion in Fig. 13, when the output St of the position sensor 10 increases rapidly, the output Se of the LPF 14a rises slowly due to the time constant. Then the output Sf+ of the comparator 12b assumes the high-level state when the difference of the signals St and Se exceeds V1. On the other hand, as shown in the right-hand portion in Fig. 13, when the output St of the position sensor 10 decreases rapidly, the output Se of the LPF 14a similarly goes down slowly due to the time constant, and the output Sf- of the comparator 12c assumes the high-level state when the difference of the signals St and Se exceeds V2. The output Sh of an OR circuit 12d, assuming a high-level state when either of the signal Sf+ or Sf- assumes the high-level state, is capable of catching a rapid increase or a rapid decrease in the signal St.

The present invention is not limited to the foregoing embodiments but is subject to other applications. For example, the foregoing description has been limited to information recording/reproduction apparatus utilizing an optical card, but the effect of the present invention is not changed when other recording medium such as an optical disk or an optical tape is employed.

Besides the AT abnormality detecting circuit 11 has fixed reference voltages V1, V2, but it is also possible to identify, in advance, the amount of displacement per time specific to the recording medium in another detecting system, and to automatically determine such reference voltage by the system controller according to the result of said identification. Also the cut-off frequency of the high-pass filter 12a may be automatically selected by the system controller 1.

The present invention includes all such modifications, as long as they are within the scope and spirit of the appended claims.

## Claims

1. An optical information recording apparatus comprising:
an optical head for recording information by irradiating a recording medium with a light beam;
a tracking servo circuit for correcting an error in position between the irradiating position of said light beam, and a track formed on said medium;
a circuit for detecting abnormality in said tracking servo; and
a control circuit for reducing the power of the light beam irradiating said medium to a non-zero level not enough for recording, in response to a detection signal from said abnormality detecting circuit.

2. An optical information recording apparatus according to claim 1, wherein said optical head comprises a lens for condensing said light beam onto the medium and rendered movable for the purpose of tracking in a direction perpendicular to the optical axis thereof; and said abnormality detecting circuit is adapted to release a detection signal when the moving velocity of said lens exceeds a predetermined value.

3. An optical information recording apparatus according to claim 2, wherein said abnormality detecting circuit comprises a displacement detector for detecting the displacement of said lens, a velocity detecting circuit for detecting the velocity of said lens from the output of said displacement detector, and a comparator for comparing the output of said velocity detecting circuit with a predetermined level.

4. An optical information recording apparatus according to claim 1, wherein said abnormality detecting circuit comprises a displacement detector for detecting the displacement of said lens, a high-pass filter for extracting, from the output of said displacement detector, components of a predetermined frequency or higher, and comparator means for releasing a detection signal when the output of said high-pass filter becomes out of a predetermined range.

5. An optical information recording apparatus according to claim 4, wherein said comparator means comprises two comparators for respectively comparing the output of said high-pass filter with an upper limit value and a lower limit value, and an OR circuit for releasing a logic sum signal of the outputs of said comparators.

6. An optical information recording apparatus according to claim 1, wherein said abnormality detecting circuit comprises a displacement detector for detecting the displacement of said lens, a differentiating circuit for differentiating the output of said displacement detector, and comparator means for releasing a detection signal when the output of said differentiating circuit becomes out of a predetermined range.

7. An optical information recording apparatus according to claim 6, wherein said comparator means comprises two comparators for respectively comparing the output of said differentiating circuit with an upper limit value and a lower limit value, and an OR circuit for releasing a logic sum signal of the outputs of said comparators.

8. An optical information recording apparatus according to claim 1, wherein said abnormality detecting circuit comprises a displacement detector for detecting the displacement of said lens, a low-pass filter for transmitting a part of the output of said displacement detector, and comparator means for releasing a detection signal when the difference of the outputs transmitted by said low-pass filter and the original output of the displacement detector exceeds a predetermined value.

9. An optical information recording apparatus according to claim 8, wherein said comparator means comprises two voltage sources for adding first or second predetermined values to the output transmitted by said low-pass filter; first and second comparators respectively receiving said output added at an inverted input terminal and an uninverted input terminal thereof, and further receiving the original output of said displacement detector at the remaining input terminals; and an OR circuit for releasing a logic sum signal of the outputs of said comparators.

10. An optical information recording apparatus according to claim 1, wherein said control circuit comprises a system controller for controlling a driving circuit for driving said light source.

11. An optical information recording apparatus in which information is recorded by applying light from a light beam to a recording medium, the apparatus responding to the detection of an abnormal condition such that said recording should be halted,
characterised in that the said response of the apparatus is to reduce the power of the light beam to a non-zero level such that the light applied to the recording medium has insufficient power to cause recording.

# FIG.1

# FIG.2

# FIG.3

FIG.4

# FIG.5

H

6d

8

9a

7

9b

# FIG.6

11

11a

St ──▶ | VELOCITY DETECTING CKT. | ── Sv ──▶ [+ amplifier] ── Sh

Vo

11b

FIG.7A

St

FIG.7B

Vo

Sv

FIG.7C

Sh

# FIG.8

LIGHT POWER

Pw

PR

A B C D E TIME

# FIG.9

St → HPF → Sf

12a

11
12b

V1 → Sf⁺

12d
Sh

V2 → Sf⁻

12c

# FIG.10A

Sf
V1
V2

# FIG.10B

Sh
H
L

# FIG.11

St ○→ | DIFFERENTIAL CKT. | 13a
Sf •

12b

$Sf^+$

$V_1$ ⏚

$V_2$ ⏚

12c

$Sf^-$

12d

Sh ○

11

# FIG.12

11

St ○—•——| LPF | 14a —Se——•

12b

$V_1$

$V_2$

$Sf^+$

12d

Sh ○

12c

$Sf^-$

# FIG.13

St

$V_1$

$V_1$

Se

$V_2$

Se

$V_2$

St

$Sf^+$

$Sf^-$